# EUROPÄISCHE PATENTSCHRIFT

(11) **EP 2 603 340 B1**
(45) Veröffentlichungstag und Bekanntmachung des Hinweises auf die Patenterteilung: **13.10.2021**
(21) Anmeldenummer: 09777818.7
(22) Anmeldetag: 11.08.2009
(51) Int. Cl.: B23B 31/117, B23B 31/02

(54) **WERKZEUGHALTER**
TOOL HOLDER
PORTE-OUTIL

(30) Priorität: 29.08.2008 DE 102008044813; 03.12.2008 DE 102008060374
(43) Veröffentlichungstag der Anmeldung: 19.06.2013
(73) Patentinhaber: Franz Haimer Maschinenbau KG, 86568 Hollenbach-Igenhausen (DE)
(72) Erfinder: HAIMER, Franz, 85568 Hollenbach (DE)
(74) Vertreter: Schwarz, Wolfgang
(86) Internationale Anmeldenummer: PCT/EP2009/005832
(87) Internationale Veröffentlichungsnummer: WO 2010/022859

(56) Entgegenhaltungen:
- EP-A1- 0 611 624
- WO-A-02/051571
- WO-A-2005/120751
- DE-A1- 4 326 023
- DE-A1-102007 007 890
- US-A- 3 630 534
- US-A- 4 500 234
- US-A- 5 324 050
- US-B1- 6 280 126
- None

## Beschreibung

Die Erfindung betrifft einen Werkzeughalter für ein um eine Drehachse drehbares Werkzeug, insbesondere in Form eines Bohrers, eines Fräsers oder eines Reibwerkzeugs. Es ist bekannt, den Schaft eines solchen Werkzeugs in einer zentrischen Aufnahmeöffnung einer ringförmigen, in sich geschlossenen, meist als Hülsenpartie ausgeführten Partie eines Werkzeughalters mittels Presssitz zu halten. Diese Hülsenpartie bildet das werkzeugseitige Ende eines Werkzeughalters ansonsten üblicher Bauart.

Die besagte Partie bzw. Hülsenpartie des Werkzeughalters kann durch Erwärmen so weit in radialer Richtung aufgeweitet werden, dass der kalte Schaft des Werkzeugs in die Hülsenpartie eingeschoben oder aus ihr herausgezogen werden kann. Sobald die Hülsenpartie wieder abgekühlt ist, stellt sich zwischen ihr und dem Schaft des Werkzeugs ein Pressverbund ein, mittels dem das Werkzeug zuverlässig in dem Werkzeughalter festgehalten wird (Schrumpftechnologie, vgl. etwa EP 1 353 768 B1).

Alternativ kann auch hydraulisch eingespannt werden. Zu diesem Zweck ist innerhalb der besagten Partie des Werkzeughalters ein hydraulisches Spannorgan angeordnet, welches bei Beaufschlagung mit hydraulischem Druck seinen den Werkzeugschaft umgreifenden Innendurchmesser verringert und so den Werkzeugschaft reibschlüssig einspannt.

Als dritte Alternative besteht die Möglichkeit, die zum sicheren reibschlüssigen Einspannen des Werkzeugschafts erforderliche Pressung auch auf rein mechanischem Wege aufzubringen, etwa mittels Zangenspannfuttern gemäß DIN ISO 15488 oder EP 1 291 103 oder Rollenspannfuttern gemäß DE 35 172 46.

Spannfutter der beschriebenen Art haben sich in der Praxis sehr bewährt.

Allerdings besteht nach wie vor das bereits vom deutschen Patent DE 199 26 209 berichtete Problem, dass sich bei einer harten Einspannung des Schaftes im Betrieb Belastungen in Form einer umlaufenden Biegebelastung ergeben können (das besagte Patent bezeichnet diese Belastungen als "Walkeffekt"), die unter Umständen bis zum Dauerbruch des Werkzeugschafts führen.

Zur Lösung dieses Problems schlägt das besagte Patent vor, in der Hülsenpartie der Werkzeugaufnahme, die das eigentliche Spannfutter bildet, Dämpfungshohlräume vorzusehen. Diese Dämpfungshohlräume werden von der Stirnseite der Hülsenpartie her als Kavitäten in die Hülsenpartie eingearbeitet. Dies ist allerdings nur mit relativ aufwändigen Fertigungsverfahren möglich, wie etwa dem Erodieren.

Wie das Patent korrekt darlegt, machen die Dämpfungshohlräume die Einspannung des Werkzeugschafts "weicher". Dies hat zur Folge, dass die auf Grund der ansonsten harten Einspannung des Schaftes auftretenden "Kardaneffekte" (so die DE 199 26 209), die zum Bruch des Werkzeugschafts führen können, ausgeschlossen bzw. weitgehend verhindert werden - oder um es mit anderen Worten auszudrücken: Indem es dem Werkzeugschaft gestattet wird sich in der nicht mehr ganz so starren Werkzeugaufnahme ein klein wenig quer zu stellen, wird die umlaufende Biegebeanspruchung, die dieser Werkzeugschaft insbesondere beim Umfangsfräsen erfährt, gegenüber der Biegebeanspruchung bei starrer Einspannung des Werkzeugschafts verringert.

Das vom besagten Patent DE 199 26 209 vorgeschlagene Einarbeiten von Dämpfungshohlräumen in die Hülsenpartie hat jedoch einige Nachteile. So verursacht die Herstellung von Dämpfungshohlräumen in der Hülsenpartie einigen Herstellungsaufwand. Zudem lassen sich in der Hülsenpartie nicht beliebige Geometrien für die Dämpfungshohlräume herstellen, vielmehr ist die Auswahl eingeschränkt. Die Gestaltungsmöglichkeiten sind also recht überschaubar, so dass es schwierig ist unter Verwendung der von der DE 199 26 209 vorgeschlagenen Dämpfungshohlräume genau die gewünschte Dämpfungscharakteristik zu realisieren.

Außerdem lässt sich die Dämpfungscharakteristik eines Werkzeughalters nicht mehr verändern, sobald die Dämpfungshohlräume in seine Hülsenpartie eingearbeitet worden sind. Die WO02/051571 zeigt eine weitere Ausführungsform eines Hülsenkörpers. Der Hülsenkörper ist mit schmalen Freiflächen versehen. Auch hier sind die Gestaltungsspielräume sehr limitiert, so dass die Dämpfungscharakteristik nicht immer wie gewünscht eingestellt werden kann. Diese Druckschrift bildet die Grundlage für die zwei-teilige Form des Anspruchs 1.

Eine weitere Schwäche der aus der DE 199 262 09 bekannten Dämpfungshohlräume liegt darin, dass diese Dämpfungshohlräume unter dem Einfluss momentaner, sehr hoher Kräfte ein sehr weites Nachgeben gestatten. Die bekannten Dämpfungshohlräume zeigen also bisweilen einen Dämpfungseffekt, dessen Ausprägung zu stark ist, da dann die Fertigungsgenauigkeit leidet, die mit dem so eingespannten Werkzeug erreicht werden kann.

Es ist daher Aufgabe der Erfindung einen Werkzeughalter anzugeben, der dämpfende Eigenschaften aufweist, bei dem die Einspannung des Werkzeugschafts aber dennoch nur um einen vorausbestimmten Betrag nachgeben kann.

Diese Aufgabe wird mit den Merkmalen des Anspruchs 1 gelöst. Der entscheidende Punkt ist, dass bei diesem Werkzeughalter die Tragflächen der Hülse nur durch Mikrofreiflächen unterbrochen sind. Bei diesen Mikrofreiflächen handelt es sich um Freiflächen mit geringer Tiefe in radialer Richtung der Hülse. Diese Mikrofreiflächen bilden örtliche Federelemente, die auf Grund ihrer geringen Tiefe nach einem definierten, kurzen Federweg auf Block gehen, also dann nicht mehr in nennenswertem Umfang weiter nachgeben.

Bevorzugt gestaltet man diese Mikrofreiflächen in ihrer Geometrie und Anordnung relativ zueinander so aus, wie oben im Detail beschrieben. Allerdings verleiht man ihnen nur eine sehr geringe Tiefe in radialer Richtung, idealerweise eine Tiefe von 0,01 mm bis 0,2 mm. In Einzelfällen genügt sogar eine unterhalb von 0,01 mm liegende Tiefe. Gleichzeitig wählt man ihre Geometrie bzw. Anordnung so, dass die jeweils betroffene Mikrofreifläche, wenn sie einer größeren als der maximal vorgesehene Verformung unterworfen wird, oder wenn die ursprüngliche Tragfläche über ein bestimmtes Maß hinaus abgeplattet wird, auf Block geht bzw. nun zu einer zusätzlichen Tragfläche wird. Dies vergrößert die ursprünglich vorhandene Tragfläche, wodurch die Hülse nun wesentlich steifer wird und weiteren Verformungen Einhalt gebietet. Dieser Effekt tritt vor allem dann auf, wenn die Hülse dünnwandig ist, also etwa mit einer Wandstärke von 1 mm oder kleiner ausgeführt ist.

Nachfolgend sind weitere optionale Ausgestaltungen eines Werkzeughalters beschrieben, dessen Dämpfungscharakteristik bei einfacherer Fertigung freier wählbar ist.

Demnach kann mindestens eine der Tragflächen der Hülse (also die Außen- und/oder die Innenumfangsfläche der Hülse, mit der die Hülse tragend gegen die Hülsenpartie des Werkzeughalters bzw. den Werkzeugschaft anliegt) durch Freiflächen unterbrochen sein. Diese Freiflächen bilden zwischen der Hülse und der Hülsenpartie der Werkzeugaufnahme bzw. dem Werkzeugschaft dämpfend wirkende Hohlräume, d. h. Hohlräume, die den von der DE 199 26 209 "Kardaneffekt" genannten Effekt mehr als nur unwesentlich verringern. Dabei ist der Begriff "Freiflächen" wirkungsorientiert zu verstehen - er umfasst auch solche Konstellationen, bei der die einzelnen Freiflächen durch Kanäle oder sonstige Vertiefungen miteinander verbunden sind, so dass man es genau genommen mit einer einzigen Freifläche zu tun hat, die verschiedene Freiflächenabschnitte aufweist. Gleiches gilt für den Begriff "Hohlräume".

Die Hülse kann, da sie separat vom Spannfutter zu bearbeiten ist, sehr rationell mit den erforderlichen Freiflächen versehen werden. Die erfindungsgemäßen Werkzeughalter lassen sich rationell herstellen, da die Werkzeughalter als solche einheitlich gefertigt werden können, ohne dass Rücksicht auf die späteren Dämpfungshohlräume genommen werden muss. Denn die Werkzeughalter erhalten ihre Dämpfungshohlräume ja erst durch die spätere Bestückung mit der Dämpfungshülse, in die die Dämpfungshohlräume eingearbeitet sind. Sofern man die Hülse so in dem jeweiligen Werkzeughalter befestigt, dass sie auch nachträglich wieder lösbar ist, lässt sich die Dämpfungscharakteristik eines jeden Werkzeughalters an das aktuell zu spannende Werkzeug anpassen. Darüber hinaus erlaubt die Austauschbarkeit der Hülsen eine problemlose Wiederinstandsetzung eines Werkzeughalters, der im Bereich der Hülse beschädigt wurde - und sei es nur, weil im Bereich der Hülse doch einmal ein Dauerbruch aufgetreten ist, was sich ja bei einem federnden Element nie ganz vermeiden lässt.

Ein ganz wesentlicher Vorteil der Erfindung ist, dass es bei einer solchen Hülse möglich ist gleichzeitig sowohl von innen her als auch von außen her Freiflächen anzubringen. Gerade solche Freiflächen machen die Hülse in ihrem Zusammenspiel zu einem elastischen Element, dessen Dämpfungseigenschaften in weiterem Umfang frei wählbar sind.

Auf diese Art und Weise lässt sich die gewünschte Dämpfungseigenschaft gut einstellen. Die Wirkung der die Tragflächen schwächenden Freiflächen am Innenumfang und am Außenumfang der Hülse lässt sich recht genau numerisch Vorhersagen. Hierbei stehen durch gezieltes Verändern der Größe, der Position und der Überlappung der einzelnen Freiflächen mannigfaltige Variationsmöglichkeiten zur Verfügung. Im Anschluss daran ist es dann problemlos möglich die Hülse ohne großen Aufwand so zu fertigen, dass sich die gewünschte Dämpfungseigenschaft einstellt, denn der Innenumfang der Hülse und der Außenumfang sind der Bearbeitung sehr gut zugänglich.

Besonders vorteilhaft ist es, wenn man die sowohl am Innenais auch am Außenumfang mit Freiflächen versehene Hülse austauschbar im Werkzeughalter befestigt. Denn dann wird es auf Grund der Tatsache, dass es die Ausgestaltung der Hülsen zulässt die Dämpfungseigenschaften fein gestuft auszuwählen, möglich, das Problem der Dämpfung systematisch anzugehen und einen Satz sehr unterschiedlicher Hülsen anzubieten. Von diesen unterschiedlichen Hülsen wird jeweils diejenige ausgewählt und in den Werkzeughalter eingesetzt (idealerweise durch Einschrumpfen zusammen mit dem Werkzeugschaft), die genau die Dämpfung realisiert, welche im konkreten Einzelfall abhängig von den Bearbeitungsparametern, dem Werkzeug und dem zu bearbeitenden Werkstoff benötigt wird. Vorzugsweise sind die Freiflächen an der Hülse in Umfangsrichtung gesehen unsymmetrisch verteilt und/oder unterschiedlich geometrisch gestaltet, nämlich so, dass die Tendenz der Hülse, Schwingungen anzuregen, herabgesetzt wird. Dies, weil von den derart durch die Freiflächen gebildeten Hohlräumen keine regelmäßigen gleichartigen Impulse ausgehen, die Schwingungen anregen könnten.

Im Rahmen einer bevorzugten Ausführungsform ist vorgesehen, die Freiflächen wechselweise so auf Versatz anzuordnen, dass in Umfangsrichtung gesehen neben denjenigen Freiflächen, die die Tragfläche am Außenumfang der Hülse schwächen, beidseitig Freiflächen angeordnet sind, die die Tragfläche am Innenumfang schwächen und umgekehrt.

Eine derart konzipierte Hülse erlaubt eine Gestaltung, die praktisch über den gesamten Umfang hinweg federnd ausgebildet ist, sich aber dennoch mit ihrem Außenumfang auf einer großen Kontaktfläche an die Passfläche des Spannfutters und mit ihrem Innenumfang auf einer großen Kontaktfläche an den Werkzeugschaft anschmiegt - ohne dass in Umfangsrichtung in sich geschlossene und daher entsprechend schwer zu bearbeitende Dämpfungshohlräume (nach Art der aus der DE 199 26 209 bekannten Dämpfungshohlräume) in die Hülse eingearbeitet werden müssen, um jeweils eine hinreichend große Kontaktfläche zur Verfügung zu stellen.

Im Wesentlichen aus patentrechtlichen Gründen ist festzuhalten, dass zusätzlich zu den zuvor beschriebenen, erfindungsgemäß ausgestalteten Freiflächen selbstverständlich örtlich einzelne Dämpfungshohlräume nach Art der in der DE 199 26 209 beschriebenen Dämpfungshohlräume vorhanden sein könnten, auch wenn aus Gründen der rationellen Herstellung vorzugsweise keine solchen Dämpfungshohlräume vorgesehen werden. Wenn man dennoch zusätzliche Hohlräume dieser Art vorsehen will, dann wird man diese Hohlräume bevorzugt unsymmetrisch verteilt anbringen oder ihnen eine unterschiedliche geometrische Ausgestaltung geben, um so die Schwingungsneigung weiter herabzusetzen.

Vorzugsweise sind die Freiflächen am Außenumfang der Hülse und die Freiflächen am Innenumfang der Hülse derart überlappend angeordnet, dass der den Überlappungsbereich bildende Abschnitt der Hülse weder unmittelbar an der Hülsenpartie des Werkzeughalters noch unmittelbar am Werkzeugschaft anliegt. Infolge der fehlenden unmittelbaren Anlage weist ein solcher Abschnitt von Hause aus ein elastisches Verhalten in radialer Richtung auf. Ein solcher Abschnitt kann daher, wenn er entsprechend dünnwandig ausgeführt wird, mit seiner Nachgiebigkeit ganz wesentlich zu der gewünschten Dämpfungswirkung beitragen. Zudem leuchtet ein, dass sich über die Dimensionierung dieser Abschnitte (Parameter: Länge des Abschnitts in Umfangsrichtung, Wandstärke des Abschnitts in radialer Richtung bzw. Geometrie und Krümmung des Abschnitts) sehr einfach die Dämpfungscharakteristik der Hülse vorherbestimmen und der Hülse im Zuge ihrer Herstellung einprägen lässt.

Im Zuge einer weiteren bevorzugten Ausgestaltung ist dabei vorgesehen, dass eine Freifläche am Außenumfang der Hülse in Umfangsrichtung gesehen mit einer Freifläche am Innenumfang der Hülse überlappt. Bei dieser Ausgestaltung liegen die beiden besagten Freiflächen also in Umfangsrichtung gesehen groß- teils nebeneinander. Sie überlappen sich nur in einem schmalen Bereich, liegen also nur entlang eines schmalen Bereichs in radialer Richtung gesehen übereinander. Durch die Variationen der Breite dieses Überlappungsbereichs lässt sich, wie schon angesprochen, einfach und effektiv eine Dimensionierung für den konkreten Einsatzfall vornehmen.

Eine ebenfalls bevorzugte Ausgestaltung sieht vor, dass eine Freifläche am Außenumfang der Hülse in Längsrichtung gesehen mit einer Freifläche am Innenumfang der Hülse überlappt. Bei dieser Ausgestaltung liegen also die Freiflächen in radialer Richtung gesehen im Wesentlichen oder zumindest zu einem großen Teil übereinander. Dies erhöht die Freiheit bei der konkreten Dimensionierung der Hülse nochmals.

Eine sehr geschickte Variante sieht vor, dass sich eine Freifläche am Außenumfang der Hülse, die eine in Längsrichtung abnehmende Tiefe besitzt, mit einer Freifläche am Innenumfang der Hülse überlappt, bei der die Tiefe in gleicher Längsrichtung zunimmt. Die Hülse besteht dann also zu einem guten Teil aus Flächen, deren Oberfläche relativ zur Drehachse des Werkzeughalters geneigt ist. Diese Flächen verleihen der Hülse ein besonders vorteilhaftes Dämpfungsverhalten.

Weitere Vorteile, Ausgestaltungsmöglichkeiten und Wirkungsweisen ergeben sich anhand der nachfolgend unter Bezugnahme auf die Figuren, deren zeichnerischer Offenbarungsgehalt in Gänze erfindungswesentlich ist, beschriebenen Ausführungsbeispiele.
Die Figur 1 zeigt ein erstes Ausführungsbeispiel der Hülse in perspektivischer Ansicht.
Die Figur 2 zeigt einen Schnitt durch die von Figur 1 gezeigte Hülse entlang der Linie C - C.
Die Figur 3 zeigt eine Detailansicht des ersten Ausführungsbeispiels gemäß der Figuren 1 und 2.
Die Figur 4 zeigt ein zweites Ausführungsbeispiel der erfindungsgemäßen Hülse, bei dem die Tiefe der Freiflächen in Achsrichtung zu- bzw. abnimmt, in perspektivischer Ansicht.
Die Figur 5 zeigt ein drittes Ausführungsbeispiel der erfindungsgemäßen Hülse, hier in der Darstellung eines der Rotationsachse verlaufenden Schnitts.
Die Figur 6 zeigt einen Schnitt durch die von Figur 5 dargestellte Hülse, entlang der durch den Buchstaben A symbolisierten Schnittlinie.
Die Figur 7 zeigt einen Schnitt durch die von Figur 5 dargestellte Hülse, entlang der durch den Buchstaben B symbolisierten Schnittlinie.
Die Figur 8 zeigt eine perspektivische Ansicht einer Hülse gemäß eines Ausführungsbeispiels.
Die Figur 9 zeigt eine Seitenansicht der von Figur 8 gezeigten Hülse unter Darstellung der hier an sich nicht sichtbaren inneren Freiflächen in gestrichelten Linien.
Die Figur 10 zeigt einen Schnitt längs der Drehachse durch die von Figur 8 dargestellte Hülse.
Die Figur 11 zeigt einen Werkzeughalter gemäß eines Ausführungsbeispiels der Erfindung.
Die Figur 12 zeigt einen Ausschnitt aus der Wand einer Hülse mit Mikrofreifläche.
Die Figur 13 zeigt, beispielhaft an Hand einer einzeln dargestellten Nut, eine Illustration einer Variante, bei der die Nuten nicht nur eine Dämpfung realisieren, sondern gleichzeitig auch eine Kühlmittelleitfunktion erfüllen (Schikane vor dem Kühlmittelaustritt)

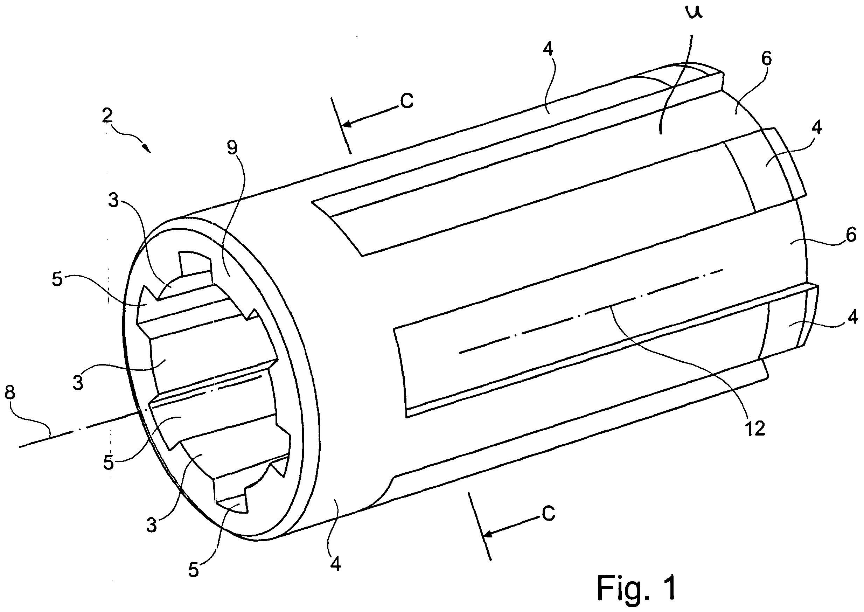

Die von der Figur 1 gezeigte, im Regelfall aus Werkzeugstahl bestehende Hülse 2 ist an ihrem inneren Umfang und an ihrem äußeren Umfang mit Tragflächen 3 und 4 versehen, deren Durchmesser so gewählt und derart genau gearbeitet ist, dass sich die erforderliche Passung mit den Gegenflächen ergibt - die Tragfläche 4 liegt auf der Außenseite bestimmungsgemäß am Innenumfang der Hülsenpartie des Werkzeughalters an. Die Tragfläche 3 liegt auf der Innenseite bestimmungsgemäß am einzuspannenden Werkzeugschaft an. Die Tragflächen 3, 4 der Hülse sind üblicherweise geschliffen.

Die Tragfläche 4 ist am Außenumfang durch eine Anzahl von im hier dargestellten Fall gleichmäßig um den Außenumfang herum verteilter äußerer Freiflächen 6 unterbrochen, die durch in radialer Richtung nach außen offene, hier im Querschnitt rechteckige Nuten gebildet werden, die also von außen her eingestochen sind. Diese Nuten weisen jeweils einen rechteckigen Grundriss auf, das heißt eine Grundfläche, die sich auf ein Rechteck projizieren lässt. Die Tragfläche 3 des Innenumfangs wird durch entsprechend gestaltete und angeordnete Freiflächen 5 unterbrochen, allerdings sind diese Nuten von innen her eingestochen und daher in radialer Richtung nach innen offen. Die Freiflächen 5 und 6 haben keine (oder zumindest keine nennenswerte) unmittelbare Verbindung miteinander, sondern liegen vollständig auf voneinander abgewandten Umfangsseiten der Hülse.

Im vorliegenden Fall sind (entlang des Umfangs) sowohl innen als auch außen jeweils sechs Freiflächen 5, 6 vorgesehen, die die Tragflächen 3, 4 jeweils in sechs, nicht mit einem eigenen Bezugszeichen gekennzeichnete Tragflächenabschnitte aufteilen. Bei dieser Gestaltung liegt die Hülse 2 sowohl mit ihrem Außenumfang nach wie vor innig an der Hülsenpartie des Werkzeughalters als auch mit ihrem Innenumfang am Schaft des Werkzeugs an. Die Anzahl der Freiflächen 5, 6 ist abhängig von den Umständen des Einzelfalls und insbesondere des Hülsendurchmessers. Sinnvollerweise werden 4 bis 10 derartiger Freiflächen 5, 6 vorgesehen.

Die Freiflächen 6 am Außenumfang erstrecken sich nicht über die gesamte axiale Länge der Hülse, sondern nur über einen großen Teil hiervon. Auf diese Art und Weise besitzt die Hülse in der Nähe einer ihrer Stirnflächen 9 einen Tragflächenabschnitt, der in Umfangsrichtung wie ein Ring in sich geschlossen ist.

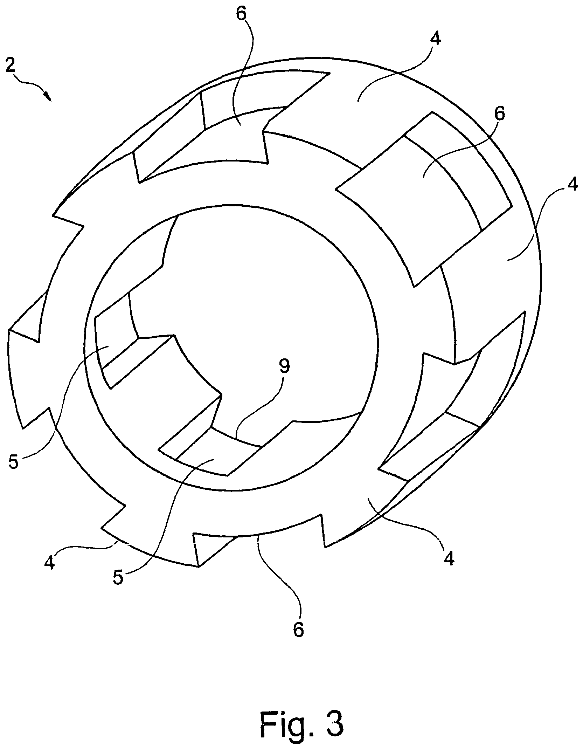

Optional erstrecken sich auch die Freiflächen 5 am Innenumfang der Hülse 2 nicht über deren gesamte axiale Länge, sondern enden mit einigem Abstand vor der Stirnfläche 9, beispielsweise so, wie von Figur 3 gezeigt. Eine solche Gestaltung ist insbesondere dort vorteilhaft, wo die Hülsen verwendet werden sollen, um durch Kühlmittelzufuhr entlang ihres Schafts innengekühlte Werkzeuge einzuspannen. Denn die als in Umfangsrichtung in sich geschlossener Ring gestalteten Abschnitte verhindern jeweils, dass die Freiflächen 5, 6 durchgehende Kanäle bilden, entlang derer das Kühlmittel vom Inneren des Werkzeughalters nach außen drückt.

Klarstellend wird betont, dass die Freiflächen 5, 6 auch als durchgehende Kanäle gestaltet werden können, so dass dem Werkzeug Kühlmittel von außen zugeführt werden kann, wenn dies gewünscht ist.

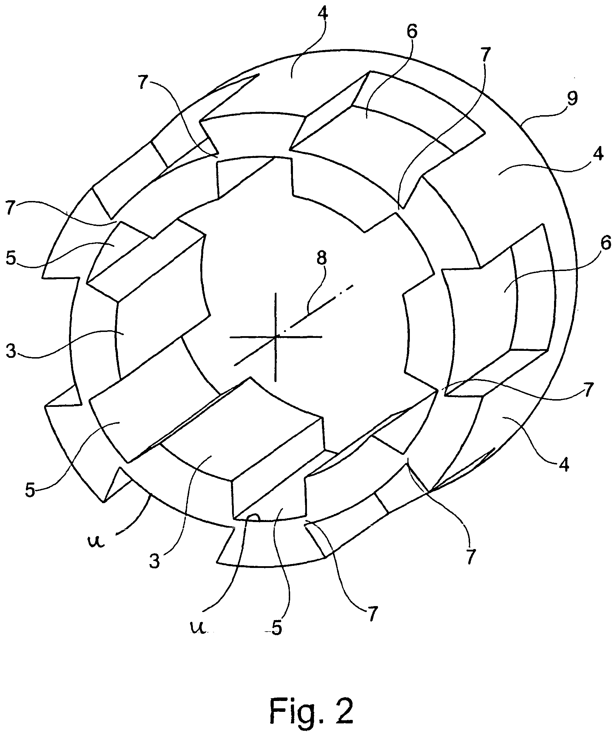

Wie man gut anhand der Figur 2 sieht, sind die Freiflächen 5 und 6 wechselweise auf Versatz angeordnet, so dass (in Umfangsrichtung gesehen) neben Freiflächen 6, die die Tragfläche 4 am Außenumfang der Hülse schwächen, beidseitig Freiflächen 5 angeordnet sind, die die Tragfläche 3 am Innenumfang schwächen - und umgekehrt. Dabei überlappen sich die Freiflächen 5, 6 am Innenumfang und am Außenumfang der Hülse nur teilweise, nämlich im Bereich ihrer parallel zur Drehachse verlaufenden Seitenränder. Diese Überlappung ist nur geringfügig. Dennoch entsteht dadurch je ein einen Überlappungsbereich bildender Abschnitt 7, der weder unmittelbar an der Hülsenpartie des Werkzeughalters noch unmittelbar am Werkzeugschaft anliegt. Angesichts dessen leuchtet ein, dass die Hülse im Bereich des Abschnitts 7 sehr nachgiebig ist, abhängig davon, wie weit sich der Abschnitt 7 zwischen den inneren und den äußeren Freiflächen 5, 6 in Umfangsrichtung erstreckt.

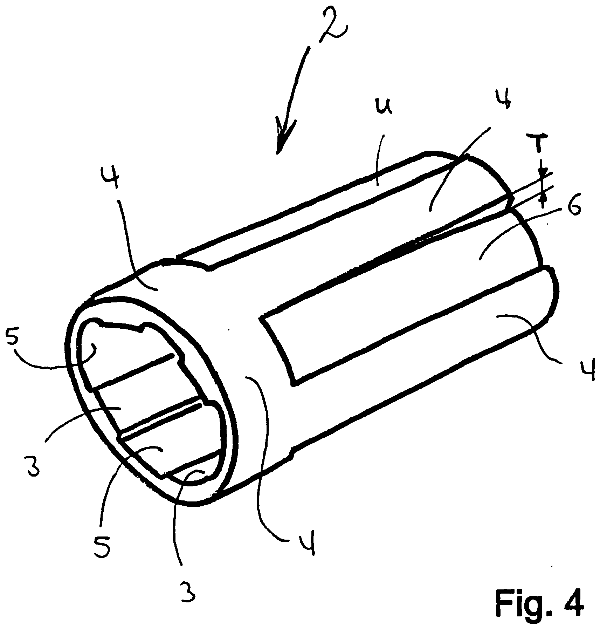

Die Fig. 4 zeigt ein zweites Ausführungsbeispiel. Bei diesem Ausführungsbeispiel verändert sich die Tiefe T zumindest eines Teils der Freiflächen (hier aller Freiflächen 6) in Achsrichtung. Auf diese Art und Weise können die Nachgiebigkeit bzw. die Dämpfungseigenschaften der Hülse in Achsrichtung gezielt variiert werden, z. B. so, dass die Hülse zum werkzeughalterseitigen Ende des Werkzeugschafts hin etwas "härter" ist.

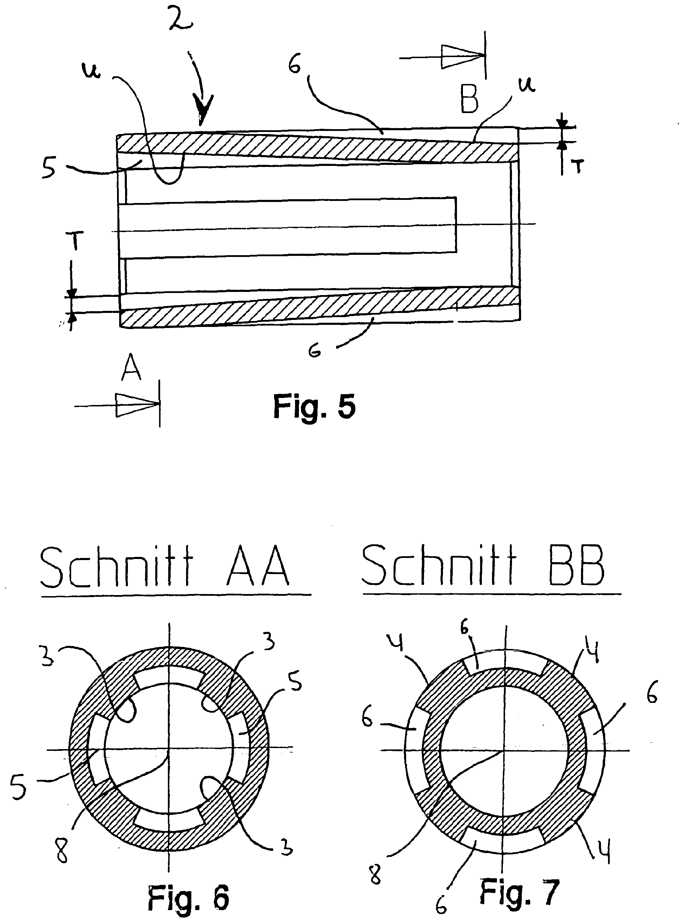

Die Figur 5 zeigt ein drittes Ausführungsbeispiel. Anderes als beim ersten und zweiten Ausführungsbeispiel überlappen sich die Freiflächen 5, 6 an der Innenseite und der Außenseite hier nicht nur im Bereich ihrer zur Drehachse parallelen Seitenränder. Vielmehr liegen jeweils eine Freifläche 5 auf der Innenseite und eine Freifläche 6 auf der Außenseite in radialer Richtung gesehen übereinander, überlappen sich also vollständig oder im Wesentlichen vollständig. Die eine Freifläche 5 besitzt eine in Richtung der Längsachse stetig abnehmende Tiefe T, während die andere Freifläche 6 in gleicher Richtung eine stetig zunehmende Tiefe T aufweist.

Weitere Details zeigen die Figuren 6 und 7, die jeweils einen Schnitt entlang der Linie A bzw. entlang der Linie B darstellen.

Auch diese Ausgestaltung dient dazu, die Nachgiebigkeit der Hülse bzw. ihre Dämpfungseigenschaften in axialer Richtung optimal an die Erfordernisse anzupassen - in Berücksichtigung der Tatsache, dass der eingespannte Abschnitt des Werkzeugschafts unter dem Einfluss der an den Schneiden des Werkzeugs auftretenden Radialkräfte die Tendenz hat, um einen Punkt zu "kippen", der - ganz grob gesagt - etwa in der Mitte der Hülse zwischen deren linker und rechter Stirnfläche liegt.

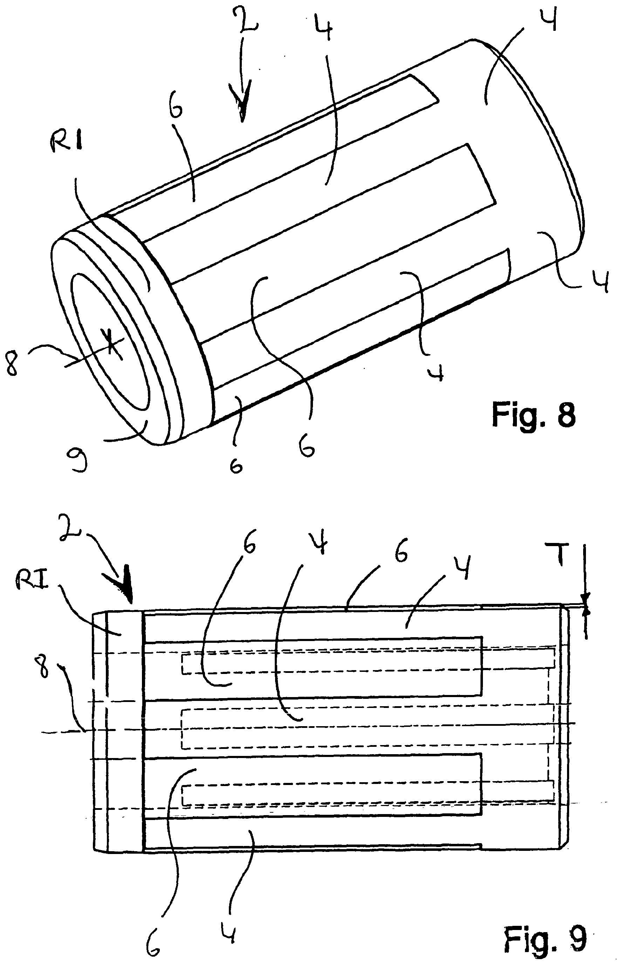

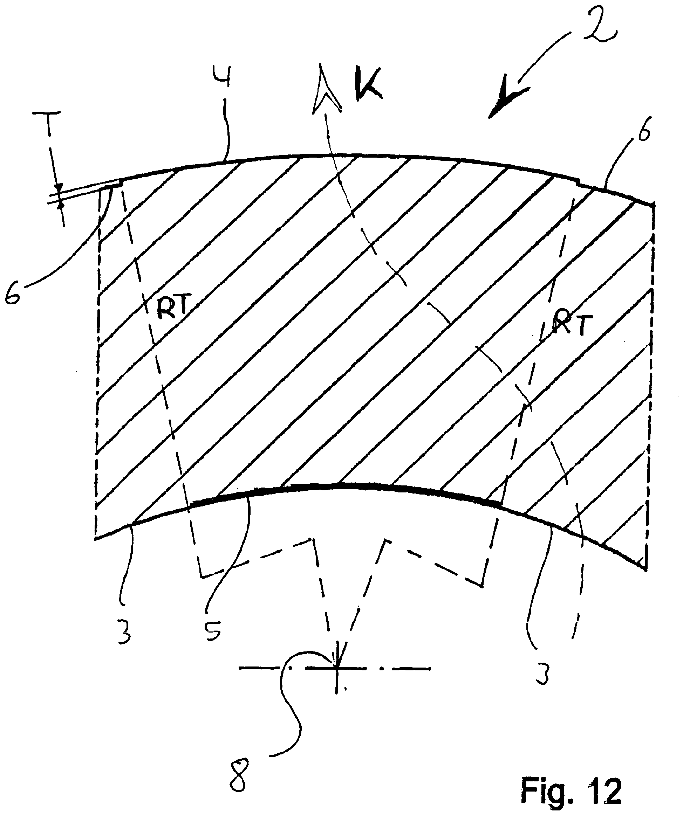

Ein viertes Ausführungsbeispiel zeigt schließlich die Figur 8. Die Freiflächen 5, 6 dieses Ausführungsbeispiels sind, was ihre Geometrie und ihre Positionierung angeht, im Prinzip mit den mit gleichem Bezugszeichen versehenen Freiflächen 5, 6 des ersten Ausführungsbeispiels vergleichbar. Das heißt, die Freiflächen 5, 6 werden im vorliegenden Fall ebenfalls durch Vertiefungen mit rechteckigem Grundriss gebildet. Allerdings ist die Tiefe T, die diese Freiflächen in radialer Richtung aufweisen, nur ein Bruchteil derjenigen Tiefe T, die die Freiflächen des ersten Ausführungsbeispiels aufweisen. Das ist insbesondere anhand der Figur 12 zu erkennen - der Radius der Freifläche ist hier beispielsweise nur etwa um 0,05 mm kleiner, als der Radius RT der Tragfläche. Dies gilt sowohl für die Innenseite als auch für die Außenseite der Hülse.

Dieser geringe Durchmesserunterschied bzw. diese geringe Tiefe T der Freiflächen 5, 6 macht hier den erfindungswesentlichen Effekt aus.

Dieser lässt sich recht einfach anhand der Figur 12 erklären. Der hier nicht gezeigte Schaft des eingespannten Werkzeugs liegt an den Tragflächen 3 am Innenumfang der Hülse an. Die vom Werkzeugschaft herrührenden Kräfte, die über die Spindel der Werkzeugmaschine abgeleitet werden sollen, laufen schräg (symbolisch durch den Pfeil K angedeutet) über die Wand der Hülse und werden über die äußere Tragfläche 4 von der Hülse an die hier nicht gezeigte Hülsenpartie des Werkzeughalters abgegeben. Bei richtiger Dimensionierung im Sinne der Erfindung ist es nun so, dass die Tragflächen 3, 4 unter Last in radialer Richtung bestimmungsgemäß zunächst ein kleines Stückchen weit nachgeben. Sobald das geschehen ist, wird die elastische Abplattung bzw. die elastische Verformung so groß, dass nun auch die benachbarten Freiflächen 5, 6 am Werkzeugschaft bzw. an der Hülsenpartie des Werkzeughalters zur Anlage kommen, zumindest bereichsweise, aber mehr als nur unwesentlich. Damit verhält sich die Hülse 2 plötzlich ausgesprochen starr, so dass es nicht zu einer unzulässig starken Verformung kommen kann.

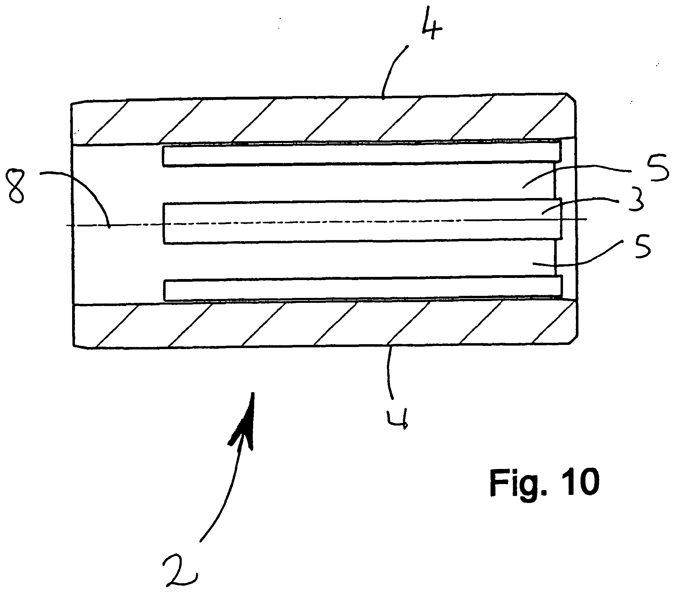

Wie man insbesondere anhand der Figuren 8 bis 10 erkennen kann, erstreckten sich die Freiflächen 5, 6 bei dieser Ausführungsform auf keiner der beiden Seiten bis in den Bereich der Stirnfläche 9 der Hülse 2, sondern enden vorher. Auf diese Art und Weise weist Hülse 2 an ihrem Außenumfang an beiden Enden einen Abschnitt auf, dessen Oberfläche einen in Umfangsrichtung geschlossenen Ring bildet. Während einer (in Figur 8 der rechte) dieser beiden Ringe noch Bestandteil der Tragfläche 4 ist, ist der andere, hier mit RI markierte der beiden Ringe mit einem kleineren Außendurchmesser ausgeführt, ist also nicht Bestandteil der den Werkzeugschaft einspannenden Passung. Dieser Ring RI erleichtert das ordnungsgemäße Einführen der Hülse 2 in die Werkzeugaufnahmeöffnung der Hülsenpartie des Werkzeughalters.

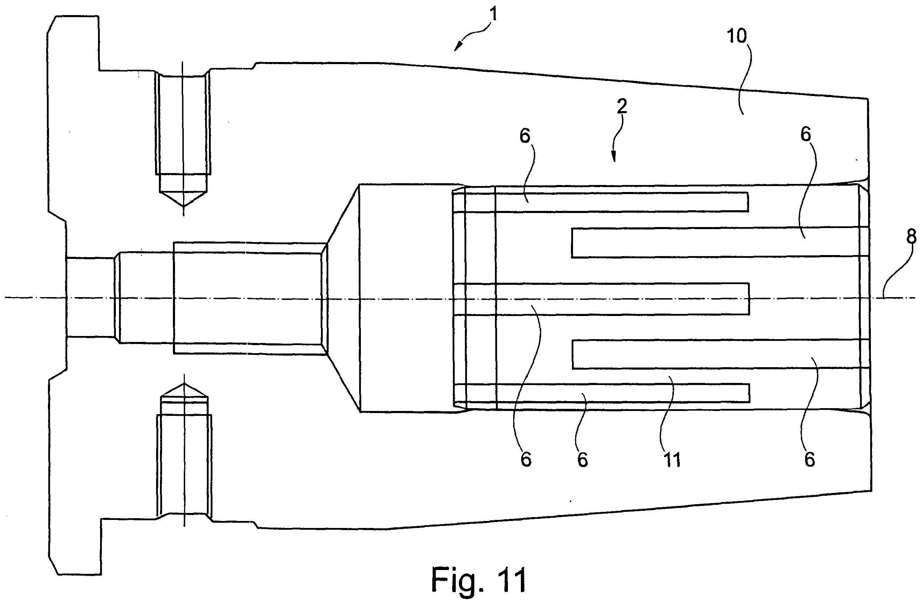

Die Figur 11 schließlich zeigt ein Ausführungsbeispiel des erfindungsgemäßen Werkzeughalters 1. Die Hülse 2 ist hier in einen Werkzeughalter 1 eingesetzt, dessen Spannfutter als Schrumpffutter ausgebildet ist. Wie hier gezeigt besitzt der Werkzeughalter eine Hülsenpartie 10 mit einer Werkzeugaufnahmeöffnung 11 in die das hier ebenfalls nicht gezeigte Werkzeug unter Zwischenlage der Hülse 2 eingesetzt wird.

Auch diese Hülse ist mit Mikrofreiflächen 6 versehen, die wiederum eine Tiefe von 0,05 mm aufweisen und daher die oben geschilderte Wirkung zeigen. Die Freiflächen 6 sind hier allerdings entlang der Außenoberfläche derart auf Versatz angeordnet, dass jeweils nur ein Teil der in Umfangsrichtung aufeinanderfolgenden Freiflächen 6 unmittelbar nebeneinander liegt.

Auf diese Art und Weise erhält man eine Hülse 2, deren dämpfende Wirkung in ihrem (in axialer Richtung gesehen) mittennahen Bereich besonders ausgeprägt ist.

Je nachdem wie stark die dämpfende Wirkung dieser Hülse 2 ausgeprägt sein soll und welche Wandstärke die Hülse aufweist bzw. aus welchem Material sie ist, kann man es mit den Freiflächen 6 am Außenumfang der Hülse 2 bewenden lassen oder zusätzlich weitere Freiflächen am Innenumfang der Hülse vorsehen (Letztere hier nicht gezeigt).

Der Vollständigkeit halber ist noch anzumerken, dass bei den Hülsen 2 gemäß des vierten und des fünften Ausführungsbeispiels unter Umständen sogar völlig auf die Mikrofreiflächen 5, 6 verzichtet werden kann, wenn diese Hülsen aus einem geeigneten, in hinreichendem Maß dämpfend wirkenden Material gefertigt werden. Als dämpfend wirkendes Material haben sich beispielsweise Kupferlegierungen, Bleilegierungen oder Bronze als zweckmäßig erwiesen.

Wie oben bereits angesprochen können die Freiflächen 5, 6 bei Ausführungen, die mit dem ersten bis dritten Ausführungsbeispiel vergleichbar sind, auch als durchgehende Kanäle gestaltet werden, so dass dem Werkzeug im Betrieb Kühlmittel von außen zugeführt werden kann. In diesem Fall ist es vorteilhaft, die Kanäle in spezieller Weise zu gestalten, nämlich so, dass möglichst ein großer Teil des Kühlmittels trotz der Werkzeugrotation am Werkzeug bis zu den zu kühlenden Werkzeugschneiden entlang läuft, anstatt vorzeitig abgeschleudert zu werden.

Zu diesem Zweck bietet es sich an, die die Nut hülsenseitig begrenzende Umfangsfläche relativ zur Drehachse der Hülse derart geneigt auszuführen, dass das diese Umfangsfläche entlanglaufende Kühlmittel bei seinem Austritt aus der Nut die Tendenz hat, hin zum Werkzeugschaft zu fließen. Natürlich lässt sich auf diese Art und Weise nicht erreichen, dass kein Kühlmittel mehr am Werkzeugschaft vorbeifließt bzw. später wieder von diesem abgeschleudert wird, jedoch wird die Menge des "verlorenen" Kühlmittels verringert.

Im Falle einer in den Außenumfang der Hülse eingearbeiteten Nut ist die die Nut hülsenseitig begrenzende Umfangsfläche diejenige Fläche, die den Nutgrund bildet, der die Nut in radial einwärtiger Richtung begrenzt. Ein Bild davon, wie die hier angesprochene Neigung aussehen kann, vermittelt die Fig. 4 - auch wenn die Fig. 4 eine Ausführungsform zeigt, bei der die Nut 6 nicht durchgängig ist und sich daher nicht zur Durchleitung von Kühlmittel eignet. Im Falle einer in den Innenumfang der Hülse eingearbeiteten Nut ist die die Nut hülsenseitig begrenzende Umfangsfläche diejenige Fläche, die den Nutgrund bildet, der die Nut in radial auswärtiger Richtung begrenzt. Das zuvor Gesagte gilt hier sinngemäß - dort, wo die Kühlflüssigkeit aus der Hülse austritt, hat eine solche Nut ihre größte Tiefe.

Eine weitere vorteilhafte Maßnahme liegt darin, die Nut so zu gestalten, dass das Kühlmittel am Ende der Nut in etwa tangential ausströmt, entgegen der Drehrichtung. Hierdurch wird erreicht, dass sich die Absolutgeschwindigkeit des austretenden Kühlmittels relativ zur gedachten (raumfesten) Drehachse der Hülse bzw. des Werkzeugschafts verringert, so dass das austretende Kühlmittel auch nur verringerten Zentrifugalkräften ausgesetzt ist, also nur eine geringere Tendenz vorzeitig abgeschleudert zu werden hat. Idealerweise strömt das Kühlmittel mit einer Relativgeschwindigkeit aus, die im Wesentlichen dem Betrag der Umfangsgeschwindigkeit entspricht, so dass das Kühlmittel zunächst, im Bereich seines Austritts aus der Hülse, absolut gesehen nahezu steht. Diese Maßnahme wird nachfolgend an Hand des Beispiels einer außenliegenden Nut erläutert, ist aber gleichermaßen auch für innenliegende Nuten geeignet.

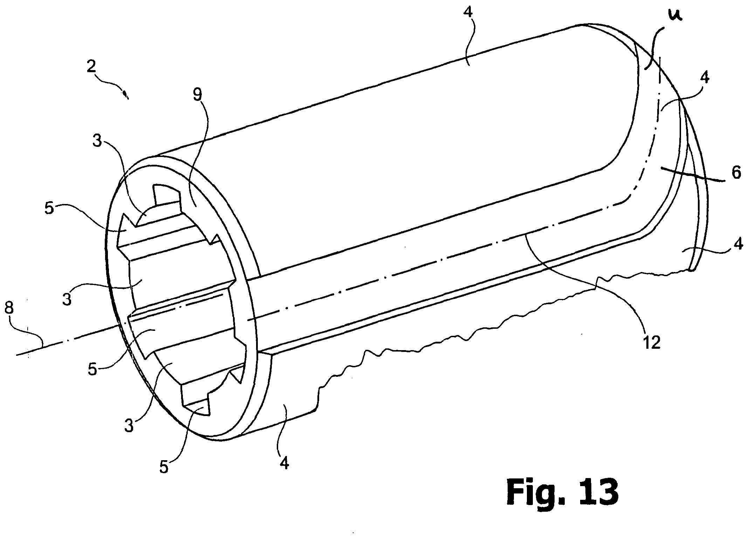

Ein Beispiel für eine solche Nut gibt die Fig. 13. Dabei ist darauf hinzuweisen, dass die Fig. 13 lediglich eine exemplarische Darstellung ist und daher nur eine einzige Nut 6 zeigt, obwohl die Hülse 2 im Regelfall an ihrem Außenumfang mit einer (meist regelmäßig angeordneten) Vielzahl derartiger Nuten versehen ist. Hier ist die Nut 6 im Bereich vor dem Austritt der Kühlflüssigkeit mit einer Art "Schikane" versehen, d. h. so gestaltet, dass die Kühlflüssigkeit umgelenkt wird und so eine Art "Drall" erhält, der die Kühlflüssigkeit mit einer nicht unerheblichen Geschwindigkeitskomponente in tangentialer Richtung austreten lässt, entgegen der Drehrichtung der hier im Regelfall im Uhrzeigersinn rotierenden Hülse 2 (Normalbetrieb Rechtslauf, bei standardmäßig linkslaufenden Sonderwerkzeugen sinngemäß umgekehrt).

Bei technisch noch ausgefeilteren Lösungen wird die Nut 6 im Austrittsbereich - anders als in Fig. 13 dargestellt - nicht mit einer mehr oder minder rechtwinkligen Schikane versehen, sondern zumindest im Endbereich gedrallt ausgeführt, hat also zumindest im Endbereich einen schraubenartigen Verlauf (mit "Linksgewinde").

In manchen Fällen lässt sich eine noch weiter verbesserte Leitwirkung der Nuten erreichen, wenn man beide der zuvor besprochenen Leitmaßnahmen kombiniert, die Nut also beispielsweise gedrallt (mit Linksdrall) ausführt und dabei gleichzeitig die die Nut hülsenseitig begrenzende Umfangsfläche geneigt ausführt (nicht gezeigt). Im Falle einer Nutgestaltung, wie von Fig. 13 gezeigt, würde es sich anbieten, zumindest den nach der Schikane angeordneten Endabschnitt der Nut mit einer die Nut hülsenseitig begrenzenden Umfangsfläche auszuführen, die geneigt ist (d. h. mit einem Nutgrund ähnlich wie in Fig. 4 gezeigt).

Zu Fig. 13 ist noch anzumerken, dass sich die Schikane optimalerweise in einem Bereich befindet, in dem die Hülse einen zumindest minimal verringerten Durchmesser aufweist, der nicht mehr (oder nicht mehr vollständig) zu der das Werkzeug haltenden Presspassung beiträgt. Denn dann behindert die Schikane die gewünschte Dämpfungswirkung der Hülse nicht wesentlich.

Die geschilderten Maßnahmen zur Leitung / Richtungsbeeinflussung des Kühlmittels sind auch für sich allein gesehen nützlich, unabhängig von der Dämpfungsfunktion der Hülse, weshalb auch isolierter Schutz beansprucht wird.

Des Weiteren ist anzumerken, dass es auch vorteilhaft ist, nur einzelne der Nuten oder eventuell auch nur eine einzige von mehreren Nuten mit den geschilderten Maßnahmen zur Leitung / Richtungsbeeinflussung des Kühlmittels zu versahen. In diesem Fall wird es meist so sein, dass nur diese einzelnen Nuten oder einzelne Nut durchgängig sind/ist und zur Beaufschlagung des Werkzeugschafts mit Kühlmittel eingesetzt wird, während den anderen Nuten nur die Funktion zukommt, die gewünschten Dämpfungseigenschaften zu gewährleisten. Man erhält so eine gewisse Entkoppelung.

### Bezugszeichenliste

- 1: Werkzeughalter
- 2: Hülse
- 3: Tragfläche am Innenumfang
- 4: Tragfläche am Außenumfang
- 5: Freifläche am Innenumgang
- 6: Freifläche am Außenumfang
- 7: Überlappender (biegeweicher) Abschnitt
- 8: Drehachse des Werkzeughalters bzw. der Hülse 2
- 9: Stirnfläche der Hülse
- 10: Hülsenpartie des Werkzeughalters
- 11: Werkzeugaufnahmeöffnung
- 12: Hauptachse der Freiflächen 6, dito bei Freifläche 5 (nicht zeichnerisch dargestellt)
- T: Tiefe der Freiflächen 5, 6
- RT: Radius der Tragfläche 4
- K: Pfeil
- RI: Ring
- U: die Nut hülsenseitig begrenzende Umfangsfläche

## Patentansprüche

1. Werkzeughalter (1) mit einer Werkzeugaufnahme zum reibschlüssigen Einspannen eines Werkzeugschafts, wobei zwischen dem Werkzeugschaft und der einspannend wirkenden Fläche des Werkzeughalters eine Hülse (2) mit zylindrischem Querschnitt liegt, über die der Werkzeugschaft von Seiten des Werkzeughalters (1) mit der den Reibschluss erzeugenden Pressung beaufschlagt wird, **dadurch gekennzeichnet, dass** zumindest eine der Tragflächen (3, 4) der Hülse durch Mikrofreiflächen (5, 6) unterbrochen wird, die ein Federelement bilden, welches auf Grund seiner geringen Tiefe nach einem definierten, kurzen Federweg auf Block geht, wobei die Tiefe der Mikrofreiflächen (5, 6) 0,01 bis 0,1 mm beträgt.

2. Werkzeughalter (1) nach Anspruch 1, **dadurch gekennzeichnet, dass** die Hülse mit einer Wandstärke von 1 mm oder kleiner ausgeführt ist.

3. Werkzeughalter nach Anspruch 1 oder 2, **dadurch gekennzeichnet, dass** mindestens eine der Tragflächen (3, 4) der Hülse (2) durch Mikrofreiflächen (5, 6) unterbrochen wird, wobei die Mikrofreiflächen (5, 6) so gestaltet und angeordnet sind, dass sie Dämpfungshohlräume bilden.

4. Werkzeughalter (1) nach Anspruch 3, **dadurch gekennzeichnet, dass** die Tragfläche (4) am Außenumfang der Hülse (2) durch erste Mikrofreiflächen (6) unterbrochen wird und die Tragfläche (3) am Innenumfang der Hülse durch zweite Mikrofreiflächen (5) unterbrochen wird, wobei die Mikrofreiflächen (5, 6) gemeinsam einen Dämpfungshohlraum bilden.

5. Werkzeughalter (1) nach einem der vorhergehenden Ansprüche 3 oder 4, **dadurch gekennzeichnet, dass** die Mikrofreiflächen in Umfangsrichtung gesehen unsymmetrisch verteilt sind und/oder unterschiedlich geometrisch gestaltet sind.

6. Werkzeughalter (1) nach einem der vorhergehenden Ansprüche 3 bis 5, **dadurch gekennzeichnet, dass** die Mikrofreiflächen (5, 6) einen langgestreckten, vorzugsweise rechteckigen Grundriss aufweisen, dessen gedachte Hauptachse (12) zumindest im Wesentlichen parallel zur Drehachse (8) des Werkzeughalters (1) verläuft.

7. Werkzeughalter (1) nach einem der vorhergehenden Ansprüche 3 bis 6, **dadurch gekennzeichnet, dass** die Mikrofreiflächen (5, 6) wechselweise auf Versatz angeordnet sind, so dass in Umfangsrichtung gesehen im Wesentlichen neben Mikrofreiflächen (6), die die Tragfläche (4) am Außenumfang der Hülse (2) schwächen, beidseitig Mikrofreiflächen (5) angeordnet sind, die die Tragfläche (3) am Innenumfang schwächen, und umgekehrt.

8. Werkzeughalter nach einem der vorhergehenden Ansprüche 3 bis 7, **dadurch gekennzeichnet, dass** die Mikrofreiflächen (6) am Außenumfang der Hülse (2) und die Mikrofreiflächen (5) am Innenumfang der Hülse überlappend angeordnet sind, derart, dass der den Überlappungsbereich bildende Abschnitt (7) der Hülse (2) weder unmittelbar an der Hülsenpartie des Werkzeughalters noch unmittelbar am Werkzeugschaft anliegt.

9. Werkzeughalter nach Anspruch 8, **dadurch gekennzeichnet, dass** die Überlappung dadurch gebildet wird, dass eine Mikrofreifläche (6) am Außenumfang der Hülse (2) in Umfangsrichtung gesehen mit einer Mikrofreifläche (5) am
Innenumfang der Hülse überlappt.

10. Werkzeughalter nach einem der vorhergehenden Ansprüche 8 oder 9, **dadurch gekennzeichnet, dass** eine Mikrofreifläche (6) am Außenumfang der Hülse (2) in Längsrichtung gesehen mit einer Mikrofreifläche (5) am Innenumfang der Hülse (2) überlappt.

11. Werkzeughalter nach Anspruch 10, **dadurch gekennzeichnet, dass** sich eine Mikrofreifläche (6) am Außenumfang der Hülse(2) mit in Längsrichtung abnehmender Tiefe (T) mit einer Mikrofreifläche (5) am Innenumfang der Hülse (2) überlappt, die in gleicher Längsrichtung eine zunehmende Tiefe (T) aufweist

12. Werkzeughalter nach einem der vorhergehenden Ansprüche 3 bis 11, **dadurch gekennzeichnet, dass** ein und dieselbe Tragfläche (4 oder 3) durch Mikrofreiflächen (6 oder 5) unterbrochen wird, die entlang derselben Längsrichtung gesehen immer abwechselnd zunehmende und abnehmende Tiefen aufweisen.

13. Werkzeughalter nach einem der vorhergehenden Ansprüche 3 bis 12, **dadurch gekennzeichnet, dass** an der Hülse des Werkzeughalters mindestens eine Nut (6) als durchgehender Kanal aus gestaltet ist, so dass dem Werkzeug im Betrieb Kühlmittel durch diese Nut zugeführt werden kann, wobei die Nut hülsenseitig begrenzende Umfangsfläche (U) relativ zur Drehachse (8) der Hülse (2) derart geneigt ausgeführt ist, dass Kühlmittel bei seinem Austritt aus der Nut (6) dem Werkzeugschaft zugelenkt wird oder dass an der Hülse des Werkzeughalters zumindest eine Nut (6) so gestaltet ist, dass das Kühlmittel im Betrieb am Ende der Nut (6) zumindest mit einer Bewegungskomponente in eine Richtung entgegen der Drehrichtung der Hülse (2) ausströmt und vorzugsweise im Wesentlichen in eine Richtung entgegen der Drehrichtung ausströmt.

14. Werkzeughaltersystem bestehend aus einem Werkzeughalter (1) nach einem der vorhergehenden Ansprüche und einem zur Verwendung in dem Werkzeughalter vorgesehenen Satz mehrerer Hülsen (2), die unterschiedlich ausgebildet sind.

## Claims

1. Tool holder (1) having a tool receptacle for frictionally clamping a tool shank in place, wherein, between the tool shank and the clamping face of the tool holder, a sleeve (2) having a cylindrical cross section is located, via which the tool shank is subjected to the pressure generating the friction fit by the tool holder (1), **characterized in that** at least one of the bearing surfaces (3, 4) of the sleeve is interrupted by micro-clearances (5, 6) that form a spring element which, on account of its shallow depth, forms a solid block after a defined, short spring travel, wherein the depth of the micro-clearances (5, 6) measures 0.01 to 0.1 mm.

2. Tool holder (1) according to Claim 1, **characterized in that** the sleeve is embodied with a wall thickness of 1 mm of less.

3. Tool holder according to Claim 1 or 2, **characterized in that** at least one of the bearing surfaces (3, 4) of the sleeve (2) is interrupted by micro-clearances (5, 6), wherein the micro-clearances (5, 6) are designed and arranged such that they form damping cavities.

4. Tool holder (1) according to Claim 3, **characterized in that** the bearing surface (4) at the outer circumference of the sleeve (2) is interrupted by first micro-clearances (6) and the bearing surface (3) at the inner circumference of the sleeve is interrupted by second micro-clearances (5), wherein the micro-clearances (5, 6) together form a damping cavity.

5. Tool holder (1) according to either of the preceding Claims 3 and 4, **characterized in that** the micro-clearances are distributed in an asymmetric manner and/or are designed with different geometries as seen in the circumferential direction.

6. Tool holder (1) according to one of the preceding Claims 3 to 5, **characterized in that** the micro-clearances (5, 6) have an elongate, preferably rectangular outline, the imaginary main axis (12) of which extends at least substantially parallel to the axis of rotation (8) of the tool holder (1).

7. Tool holder (1) according to one of the preceding Claims 3 to 6, **characterized in that** the micro-clearances (5, 6) are arranged alternately in an offset manner such that, as seen in the circumferential direction, micro-clearances (5) that weaken the bearing surface (3) at the inner circumference are arranged on both sides substantially next to micro-clearances (6) that weaken the bearing surface (4) at the outer circumference of the sleeve (2), and vice versa.

8. Tool holder according to one of the preceding Claims 3 to 7, **characterized in that** the micro-clearances (6) at the outer circumference of the sleeve (2) and the micro-clearances (5) at the inner circumference of the sleeve are arranged in an overlapping manner such that the portion (7) of the sleeve (2) that forms the overlapping region bears neither on the sleeve part of the tool holder nor directly on the tool shank.

9. Tool holder according to Claim 8, **characterized in that** the overlap is formed **in that** a micro-clearance (6) at the outer circumference of the sleeve (2) overlaps, as seen in the circumferential direction, a micro-clearance (5) at the inner circumference of the sleeve.

10. Tool holder according to either of the preceding Claims 8 and 9, **characterized in that** a micro-clearance (6) at the outer circumference of the sleeve (2) overlaps, as seen in the longitudinal direction, a micro-clearance (5) at the inner circumference of the sleeve (2).

11. Tool holder according to Claim 10, **characterized in that** a micro-clearance (6) at the outer circumference of the sleeve (2) having a depth (T) that decreases in the longitudinal direction overlaps a micro-clearance (5) at the inner circumference of the sleeve (2), which has a depth (T) that increases in the same longitudinal direction.

12. Tool holder according to one of the preceding Claims 3 to 11, **characterized in that** one and the same bearing surface (4 or 3) is interrupted by micro-clearances (6 or 5), which have alternately increasing and decreasing depths as seen along the same longitudinal direction.

13. Tool holder according to one of the preceding Claims 3 to 12, **characterized in that**, on the sleeve of the tool holder, at least one groove (6) is configured as a continuous channel, such that coolant can be fed to the tool during operation by this groove, wherein circumferential surface (U) delimiting the groove on the sleeve side is embodied in an inclined manner relative to the axis of rotation (8) of the sleeve (2) such that coolant, upon exiting the groove (6), is deflected towards the tool shank, or that, on the sleeve of the tool holder, at least one groove (6) is designed such that, during operation, the coolant flows out at the end of the groove (6) at least with a motion component in a direction counter to the direction of rotation of the sleeve (2) and preferably flows out substantially in a direction counter to the direction of rotation.

14. Tool holder system consisting of a tool holder (1) according to one of the preceding claims and a set, provided for use in the tool holder, of a plurality of sleeves (2) that are configured in different ways.

## Revendications

1. Porte-outil (1) comportant un logement d'outil servant au serrage par friction d'une tige d'outil, une douille (2) de section transversale cylindrique se trouvant entre la tige d'outil et la surface à action de serrage du porte-outil, douille par le biais de laquelle la tige d'outil peut être soumise à la pression générant l'engagement par friction depuis des côtés du porte-outil (1), **caractérisé en ce qu'**au moins l'une des surfaces d'appui (3, 4) de la douille est interrompue par des micro-surfaces libres (5, 6) qui forment un élément ressort, lequel, en raison de sa faible profondeur, est comprimé à bloc après une courte course de ressort définie, la profondeur des micro-surfaces libres (5, 6) étant de 0,01 à 0,1 mm.

2. Porte-outil (1) selon la revendication 1, **caractérisé en ce que** la douille est réalisée de manière à présenter une épaisseur de paroi inférieure ou égale à 1 mm.

3. Porte-outil selon la revendication 1 ou 2, **caractérisé en ce qu'**au moins l'une des surfaces d'appui (3, 4) de la douille (2) est interrompue par des micro-surfaces libres (5, 6), les micro-surfaces libres (5, 6) étant configurées et disposées de telle sorte qu'elles forment des cavités d'amortissement.

4. Porte-outil (1) selon la revendication 3, **caractérisé en ce que** la surface d'appui (4) au niveau de la périphérie extérieure de la douille (2) est interrompue par des premières micro-surfaces libres (6) et la surface d'appui (3) au niveau de la périphérie intérieure de la douille est interrompue par des deuxièmes micro-surfaces libres (5), les micro-surfaces libres (5, 6) formant conjointement une cavité d'amortissement.

5. Porte-outil (1) selon l'une des revendications précédentes 3 ou 4, **caractérisé en ce que** les micro-surfaces libres, vues dans la direction périphérique, sont réparties de manière non symétrique et/ou configurées de manière différente géométriquement.

6. Porte-outil (1) selon l'une des revendications précédentes 3 à 5, **caractérisé en ce que** les micro-surfaces libres (5, 6) présentent un tracé allongé, de préférence rectangulaire, dont l'axe principal imaginaire (12) s'étend au moins sensiblement parallèlement à l'axe de rotation (8) du porte-outil (1).

7. Porte-outil (1) selon l'une des revendications précédentes 3 à 6, **caractérisé en ce que** les micro-surfaces libres (5, 6) sont disposées de manière décalée en alternance, de sorte que, vues dans la direction périphérique, des micro-surfaces libres (5) qui affaiblissent la surface d'appui (3) au niveau de la périphérie intérieure sont disposées sensiblement des deux côtés et près de micro-surfaces libres (6) qui affaiblissent la surface d'appui (4) au niveau de la périphérie extérieure de la douille (2), et inversement.

8. Porte-outil selon l'une des revendications précédentes 3 à 7, **caractérisé en ce que** les micro-surfaces libres (6) au niveau de la périphérie extérieure de la douille (2) et les micro-surfaces libres (5) au niveau de la périphérie intérieure de la douille sont disposées en chevauchement, de telle sorte que la partie (7) de la douille (2) formant la zone de chevauchement ne s'appuie ni directement contre la partie de douille du porte-outil ni directement contre la tige d'outil.

9. Porte-outil selon la revendication 8, **caractérisé en ce que** le chevauchement est formé par le fait qu'une micro-surface libre (6) au niveau de la périphérie extérieure de la douille (2), vue dans la direction périphérique, chevauche une micro-surface libre (5) au niveau de la périphérie intérieure de la douille.

10. Porte-outil selon l'une des revendications précédentes 8 ou 9, **caractérisé en ce qu'**une micro-surface libre (6) au niveau de la périphérie extérieure de la douille (2), vue dans la direction longitudinale, chevauche une micro-surface libre (5) au niveau de la périphérie intérieure de la douille (2).

11. Porte-outil selon la revendication 10, **caractérisé en ce qu'**une micro-surface libre (6) au niveau de la périphérie extérieure de la douille (2), présentant une profondeur (T) décroissante dans la direction longitudinale, chevauche une micro-surface libre (5) au niveau de la périphérie intérieure de la douille (2), laquelle présente une profondeur croissante (T) dans la même direction longitudinale.

12. Porte-outil selon l'une des revendications précédentes 3 à 11, **caractérisé en ce qu'**une seule et même surface d'appui (4 ou 3) est interrompue par des micro-surfaces d'appui (6 ou 5) qui, vues le long de la même direction longitudinale, présentent des profondeurs toujours croissantes et décroissantes en alternance.

13. Porte-outil selon l'une des revendications précédentes 3 à 12, **caractérisé en ce qu'**au moins une rainure (6) est configurée en tant que canal continu sur la douille du porte-outil, de sorte qu'un réfrigérant puisse être acheminé à l'outil lors du fonctionnement par le biais de cette rainure, la surface périphérique (U) délimitant la rainure du côté de la douille étant réalisée de manière inclinée par rapport à l'axe de rotation (8) de la douille (2), de telle sorte que le réfrigérant soit dévié vers la tige d'outil lors de sa sortie de la rainure (6), ou **en ce qu'**au moins une rainure (6) est configurée sur la douille du porte-outil de telle sorte que le réfrigérant, lors du fonctionnement, s'écoule à l'extrémité de la rainure (6) au moins avec une composante de déplacement dans un sens opposé au sens de rotation de la douille (2) et s'écoule de préférence sensiblement dans un sens opposé au sens de rotation.

14. Système de porte-outil constitué d'un porte-outil (1) selon l'une des revendications précédentes et d'un ensemble de plusieurs douilles (2) qui sont réalisées de manière différente, lequel ensemble est prévu dans le porte-outil.
